# FASCICULE DE BREVET EUROPEEN

(11) **EP 1 306 247 B1**
(45) Date de publication et mention de la délivrance du brevet: **28.12.2005**
(21) Numéro de dépôt: 02292656.2
(22) Date de dépôt: 25.10.2002
(51) Int. Cl.: B60H 1/00

(54) **Ensemble comprenant un montant latéral creux d'une ossature d'un véhicule et installation et véhicule utilisant un tel ensemble**
Einheit bestehend aus einem Seitenhohlelement, einem Fahrzeugrahmen und Vorrichtung und Fahrzeug die eine solche Einheit enthält
Assembly comprising a hollow side member of a vehicle frame and device and vehicle using such an assembly

(30) Priorité: 29.10.2001 FR 0113961
(43) Date de publication de la demande: 02.05.2003
(73) Titulaire: Renault s.a.s., 92100 Boulogne Billancourt (FR)
(72) Inventeur: Grisot, Sylvain, 78150 Le Chesnay (FR)

(56) Documents cités:
- WO-A-99/61270
- DE-A- 2 610 050
- PATENT ABSTRACTS OF JAPAN vol. 2000, no. 22, 9 mars 2001 (2001-03-09) & JP 2001 130243 A (SUZUKI MOTOR CORP), 15 mai 2001 (2001-05-15)

## Description

### DOMAINE TECHNIQUE

L'invention concerne un ensemble pour un véhicule, cet ensemble comprenant un conduit latéral de montant d'ossature du véhicule, le conduit latéral autorisant une circulation d'air.

L'invention concerne également une installation de chauffage, de ventilation et de climatisation pour un véhicule, cette installation utilisant au moins un ensemble tel que mentionné ci-dessus.

De plus, l'invention concerne en outre un véhicule du type comprenant une installation de chauffage, de ventilation et de climatisation, l'installation utilisée comprenant également au moins un ensemble tel que mentionné ci-dessus.

### ETAT DE LA TECHNIQUE ANTERIEURE

Dans ce domaine technique, plusieurs réalisations ont déjà été proposées.

En référence aux demandes de brevet français FR-A-2659908 et FR-A-2717745, on connaît des installations de chauffage et de climatisation comprenant des conduits utilisés pour acheminer l'air traité vers des bouches de distribution, celles-ci étant réparties à l'intérieur de l'habitacle d'un véhicule.

Ces installations sont réalisées de telle sorte que les conduits cités ci-dessus constituent également une partie de l'ossature du véhicule, en particulier les montants latéraux de cette ossature, séparant deux portes se situant d'un même côté du véhicule.

Cependant, dans les réalisations connues de l'art antérieur, la conception des installations a été effectuée sans tenir compte de l'éventuelle adjonction d'un système de ceinture de sécurité, ce dernier étant pourtant indispensable dans tout véhicule automobile.

De plus, un véhicule disposant d'une ossature avec les caractéristiques particulières citées précédemment, ne peut intégrer un système de ceinture de sécurité de la même manière qu'un véhicule comprenant une ossature classique, en raison de la nécessité de réaliser la circulation d'air à l'intérieur de certains éléments de l'ossature.

Notons enfin que les véhicules de l'art antérieur utilisant de telles ossatures sont confrontés d'une part au problème de la déperdition calorifique, et d'autre part au problème de la complexité de la structure du véhicule, notamment engendrée par la présence des conduites d'air.

### EXPOSÉ DE L'INVENTION

Le but de la présente invention est donc de proposer un ensemble pour véhicule comprenant un conduit latéral d'un montant d'ossature du véhicule et présentant des moyens autorisant la circulation d'air, cet ensemble étant également apte à coopérer avec un système de ceinture de sécurité.

Un autre but de l'invention est de proposer une installation de chauffage, de ventilation et de climatisation utilisant au moins un ensemble répondant au problème technique ci-dessus, ainsi qu'un véhicule utilisant une installation comprenant au moins un tel ensemble.

Pour ce faire, l'invention a tout d'abord pour objet un ensemble pour véhicule, comprenant un conduit latéral de montant d'ossature du véhicule, ce conduit latéral autorisant une circulation d'air. Le conduit latéral comprend également une portion comportant deux passages d'air séparés par un espace apte à être traversé par une sangle d'un système de ceinture de sécurité.

Avantageusement, l'invention propose donc un ensemble remplissant la double fonction de laisser circuler l'air au niveau du montant latéral de l'ossature, mais également de permettre à un système de ceinture de sécurité classique de pouvoir coopérer avec ce montant latéral, en fournissant un espace adapté pour autoriser le passage de la sangle.

Ainsi, le système de ceinture de sécurité et le conduit latéral de montant de l'ossature du véhicule constituent un groupe d'éléments compact, permettant de disposer d'excellentes prestations aérauliques à l'intérieur de l'habitacle.

De plus, la configuration spécifique adoptée permet à l'ensemble selon l'invention d'être installé sur des véhicules ayant été conçus pour recevoir une ossature classique, sans avoir à modifier la forme générale du véhicule.

En particulier, le conduit latéral comprend une partie inférieure et une partie supérieure, chacune des parties ayant une première extrémité à passage d'air unique et une seconde extrémité comprenant les deux passages d'air. Les secondes extrémités des parties inférieure et supérieure sont aptes à coopérer l'une avec l'autre.

De manière avantageuse, la particularité citée ci-dessus est caractéristique d'un procédé de montage de l'ensemble avec le système de ceinture de sécurité qui se doit de rester simple. En effet, cette réalisation en deux parties est spécialement intéressante dans le sens où elle permet, dans un premier temps, de faire passer la sangle du système de ceinture de sécurité au travers de l'espace prévu à cet effet, puis, dans un second temps seulement, de raccorder les deux parties entre elles, au niveau des secondes extrémités. L'opération du passage de la sangle dans l'espace indiqué serait beaucoup plus délicate à réaliser sans une telle configuration présentant une accessibilité à l'espace, avant le montage de deux parties du montant latéral l'une sur l'autre.

De façon particulière, l'ensemble selon l'invention comprend une doublure de l'ossature du véhicule sur laquelle est fixée une surface de la partie inférieure du conduit latéral orientée vers l'extérieur du véhicule, cette doublure supportant un enrouleur du système de ceinture de sécurité. En outre, cet ensemble comprend également un baudrier de l'ossature sur lequel est fixée une surface de la partie supérieure du conduit latéral orientée vers l'intérieur du véhicule, ce baudrier supportant un renvoi du système de ceinture de sécurité.

De façon avantageuse, on dispose alors d'un ensemble apte à autoriser la circulation de l'air, cet ensemble étant également muni d'un système de ceinture de sécurité. Cela se traduit par un gain de place à l'intérieur de l'habitacle du véhicule, découlant directement du caractère compact de l'ensemble. De plus, on dispose avantageusement d'un ensemble facilitant le montage du véhicule.

Selon un mode de réalisation préféré de l'invention, l'espace apte à être traversé par la sangle du système de ceinture de sécurité se situe environ à mi-hauteur du véhicule. Ceci permet avantageusement de se conformer aux véhicules déjà existants, susceptibles d'être aménagés pour recevoir des ensembles selon l'invention.

En outre, la somme des sections des deux passages d'air est supérieure ou égale à la section moyenne de la partie inférieure du conduit latéral. Les pertes de charge lors de l'écoulement de l'air dans les conduits latéraux sont donc faibles en raison de cette disposition spécifique.

De plus, pour diminuer davantage ces pertes de charge, l'espace a l'intérieur duquel doit passer la sangle est de forme du type goutte d'eau s'étendant dans une direction principale du conduit latéral.

Un autre objet de l'invention est une installation de chauffage, de ventilation et de climatisation pour véhicule, cette installation comprenant au moins un ensemble tel que cité précédemment.

Enfin, un dernier objet de l'invention est un véhicule du type comprenant une installation de chauffage, de ventilation et de climatisation, ce véhicule comprenant au moins un ensemble tel que décrit ci-dessus.

D'autres avantages et caractéristiques de l'invention apparaîtront dans la description détaillée, non limitative, ci-dessous.

### BRÈVE DESCRIPTION DES DESSINS

Cette description sera faite au regard des dessins annexés parmi lesquels :
- la figure 1 représente une vue schématique d'un ensemble pour véhicule selon un mode de réalisation préféré de l'invention.
- la figure 2 représente une vue partielle en perspective de l'ensemble de la figure 1.

### EXPOSÉ DÉTAILLÉ DE MODES DE RÉALISATION PARTICULIERS

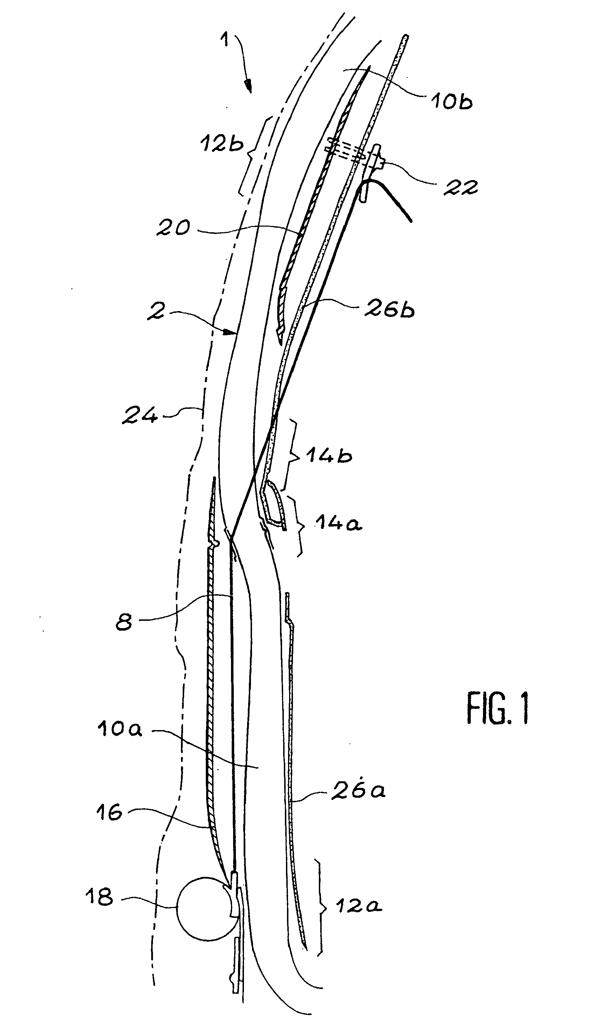

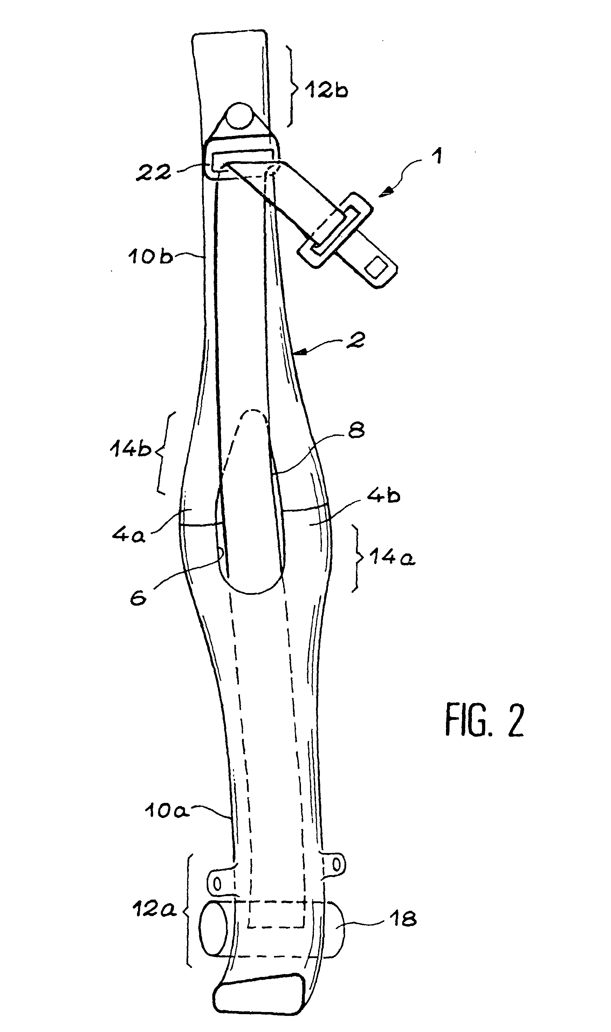

En référence aux figures 1 et 2, on voit un ensemble 1 destiné à être utilisé dans un véhicule (non représenté) comprenant une installation de chauffage, de ventilation et de climatisation.

Plus spécifiquement, l'invention est destinée à être mise en oeuvre dans un véhicule comprenant des conduits latéraux 2 creux de montant d'une ossature du véhicule, ces conduits latéraux 2 servant à la circulation d'air pour l'installation de chauffage, de ventilation et de climatisation.

L'ossature d'un véhicule comprend généralement des montants latéraux ainsi qu'un châssis (non représenté).

On entend par montant latéral la partie de l'ossature du véhicule qui se situe au niveau d'une paroi latérale de la voiture, entre deux rangées de siège(s). Dans les véhicules automobiles classiques comprenant trois, quatre ou cinq portes, ce type de véhicule disposant donc d'une rangée de siège(s) avant et d'une rangée de siège(s) arrière, les montants latéraux sont au nombre de deux, chacun placé d'un côté du véhicule. On notera que pour les véhicules du type quatre ou cinq portes, les montants latéraux séparent de chaque côté du véhicule les portes avant et arrière.

Cependant, ces montants latéraux creux peuvent également être utilisés à l'arrière de la voiture, à proximité et en retrait d'une rangée de siège(s) arrière.

Chaque montant latéral de l'ossature comprend des éléments de structure et des organes autorisant la circulation d'air.

En effet, l'ensemble 1 selon l'invention comprend donc un conduit latéral 2 autorisant la circulation d'air, ce conduit latéral 2, de préférence en matière plastique, étant muni d'une portion comportant deux passages d'air 4a,4b.

Les deux passages d'air 4a,4b sont séparés par un espace 6 apte à être traversé par une sangle 8 d'un système de ceinture de sécurité.

Plus précisément, le conduit latéral 2 comprend une partie inférieure 10a et une partie supérieure 10b. La partie inférieure 10a du conduit latéral 2 comprend une première extrémité 12a à passage d'air unique, ainsi qu'une seconde extrémité 14a comprenant les deux passages d'air 4a,4b.

Il en est de même pour la partie supérieure 10b du conduit latéral 2 qui comprend également une première extrémité 12b à passage d'air unique, ainsi qu'une seconde extrémité 14b comprenant les deux passages 4a,4b.

Les parties inférieure 10a et supérieure 10b du conduit latéral 2 sont aptes à être connectées de façon étanche, préférablement par simple emboîtement. Cette connexion est réalisée au niveau de leurs secondes extrémités respectives 14a,14b, en raccordant les deux passages 4a,4b définissant l'espace 6 au travers duquel coulisse la sangle 8 du système de ceinture de sécurité.

Dans une portion du conduit latéral 2 se situant au niveau de l'espace 6, la somme des sections des deux passages 4a,4b est supérieure ou égale à la section moyenne de la partie inférieure 10a du conduit latéral 2. Il est à noter que l'on entend par section moyenne de la partie inférieure 10a, une section quelconque de cette partie inférieure 10a ne se situant pas à proximité de la seconde extrémité 14a, la section dans cette zone étant quasiment constante comme on peut le constater sur la figure 2.

L'espace 6, délimité par les secondes extrémités 14a,14b des parties 10a,10b du conduit latéral 2, prend préférablement la forme d'une goutte d'eau s'étendant dans une direction principale du conduit latéral 2. Cette direction principale est celle d'un axe longitudinal, généralement orienté dans le sens de la hauteur du véhicule et s'étendant généralement du plancher jusqu'au toit de ce véhicule. De plus, cet espace 6 peut se situer à mi-hauteur du véhicule, ceci étant particulièrement adapté lors de l'utilisation du système de ceinture de sécurité par un passager ou un conducteur.

L'ensemble 1 selon l'invention est également muni d'une pluralité d'éléments de structure destinés d'une part à constituer en partie le montant latéral de l'ensemble 1, et d'autre part à supporter le système de ceinture de sécurité.

Ainsi, l'ensemble 1 comprend une doublure 16 de caisse, cette doublure 16 étant de préférence fixée par soudure à l'ossature du véhicule, par exemple au plancher. La doublure 16, de préférence métallique, est orientée vers l'intérieur du véhicule par rapport à la carrosserie extérieure du véhicule (figure 1). Sur la doublure 16, est fixé un enrouleur 18 appartenant au système de ceinture de sécurité.

De plus, l'ensemble 1 comprend un baudrier 20 fixé sur une partie supérieure du montant latéral de l'ossature du véhicule. Le baudrier 20, de préférence métallique, est placé sur une surface de la partie supérieure du montant qui est orientée vers l'intérieur du véhicule. Sur le baudrier 20, est fixé un renvoi 22 appartenant au système de ceinture de sécurité.

Selon un tel agencement, la portion de la sangle 8 se situant sous l'espace 6 coulisse côté extérieur du véhicule de sorte que cette sangle 8 soit cachée du conducteur ou du passager, tandis que la portion de la sangle 8 se situant au-dessus de l'espace 6 coulisse côté intérieur du véhicule, de sorte que cette sangle 8 soit manipulable par un conducteur ou un passager se trouvant à l'intérieur du véhicule.

Selon ce mode de réalisation préféré de l'invention, l'ensemble 1 dispose d'un renfort extérieur 24 de structure, fixé de préférence par soudage d'une part à la doublure 16, et d'autre part au baudrier 20. Il est à noter que la partie supérieure 10b du conduit latéral 2, située entre le renfort extérieur 24 et le baudrier 20, est également fixée au renfort extérieur 24, par exemple à l'aide d'un rivet de préférence en matière plastique.

L'ensemble 1 comprend également un habillage inférieur 26a et un habillage supérieur 26b, chacun de ces éléments ayant une fonction principale esthétique, et étant de préférence en matière plastique.

L'habillage inférieur 26a est fixé sur une surface de la doublure 16, cette surface étant orientée vers l'intérieur du véhicule, de sorte que cet habillage soit visible par un conducteur ou un passager se situant à l'intérieur du véhicule. Pareillement, l'habillage supérieur 26b est fixé sur une surface du baudrier 20 orientée vers l'intérieur du véhicule pour les mêmes raisons que celles citées ci-dessus.

Le procédé d'assemblage de cet ensemble 1, comprenant à la fois le conduit latéral 2, les différents éléments de structure rapportés, ainsi que le système de ceinture de sécurité, s'effectue de la façon suivante.

On installe tout d'abord l'enrouleur 18 sur la partie inférieure de la doublure 16 du montant latéral.

Ensuite, on installe le baudrier 20 sur la partie supérieure du montant latéral d'ossature, puis on vient placer le renvoi 22 du système de ceinture de sécurité sur ce même baudrier 20.

Après avoir fait passer la sangle 8 dans l'espace 6, on peut joindre les parties inférieure 10a et supérieure 10b du conduit latéral 2 apte à laisser circuler l'air.

L'invention concerne également une installation de chauffage, de ventilation et de climatisation pour véhicule automobile, cette installation comprenant au moins un ensemble 1 tel que celui décrit précédemment, et comprenant de préférence deux de ces ensembles 1.

Enfin, l'invention concerne aussi un véhicule comprenant une installation de chauffage, de ventilation et de climatisation, cette installation utilisant au moins un ensemble 1 tel que celui décrit ci-dessus, et comprenant de préférence deux de ces ensembles 1.

Bien entendu, diverses modifications peuvent être apportées par l'homme de l'art à l'ensemble, l'installation et le véhicule qui viennent d'être décrits, uniquement à titre d'exemples non limitatifs.

## Revendications

1. Ensemble (1) pour véhicule, comprenant un conduit latéral (2) de montant d'ossature du véhicule, ce conduit (2) autorisant une circulation d'air, **caractérisé en ce que** ledit conduit (2) comprend une portion comportant deux passages d'air (4a,4b) séparés par un espace (6) apte à être traversé par une sangle (8) d'un système de ceinture de sécurité.

2. Ensemble (1) selon la revendication 1, **caractérisé en ce que** le conduit (2) comprend une partie inférieure (10a) et une partie supérieure (10b), chacune des parties (10a,10b) ayant une première extrémité (12a,12b) à passage d'air unique et une seconde extrémité (14a,14b) comprenant lesdits deux passages d'air (4a,4b), les secondes extrémités (14a,14b) des parties inférieure (10a) et supérieure (10b) étant aptes à coopérer l'une avec l'autre.

3. Ensemble (1) selon la revendication 2, **caractérisé en ce que** cet ensemble (1) comprend une doublure (16) de l'ossature sur laquelle est fixée une surface de la partie inférieure (10a) du conduit (2) orientée vers l'extérieur du véhicule, cette doublure (16) supportant un enrouleur (18) du système de ceinture de sécurité.

4. Ensemble (1) selon la revendication 2 ou la revendication 3, **caractérisé en ce que** cet ensemble (1) comprend un baudrier (20) de l'ossature sur lequel est fixée une surface de la partie supérieure (10b) du conduit (2) orientée vers l'intérieur du véhicule, ce baudrier (20) supportant un renvoi (22) du système de ceinture de sécurité.

5. Ensemble (1) selon l'une quelconque des revendications 2 à 4, **caractérisé en ce que** cet ensemble (1) comprend un habillage inférieur (26a) fixé sur une surface de la doublure (16) orientée vers l'intérieur du véhicule.

6. Ensemble (1) selon la revendication 4 ou la revendication 5, **caractérisé en ce que** cet ensemble (1) comprend un habillage supérieur (26b) fixé sur une surface du baudrier (20) orientée vers l'intérieur du véhicule.

7. Ensemble (1) selon l'une quelconque des revendications précédentes, **caractérisé en ce que** l'espace (6) apte à être traversé par la sangle (8) du système de ceinture de sécurité se situe environ à mi-hauteur du véhicule.

8. Ensemble (1) selon l'une quelconque des revendications 2 à 7, **caractérisé en ce que** la somme des sections desdits deux passages d'air (4a,4b) est supérieure ou égale à la section moyenne de la partie inférieure (10a) du conduit (2).

9. Ensemble (1) selon l'une quelconque des revendications précédentes, **caractérisé en ce que** ledit espace (6) est de forme du type goutte d'eau s'étendant dans une direction principale du conduit (2).

10. Installation de chauffage, de ventilation et de climatisation pour véhicule, **caractérisée en ce qu'**elle comprend au moins un ensemble (1) selon l'une quelconque des revendications précédentes.

11. Véhicule du type comprenant une installation de chauffage, de ventilation et de climatisation, **caractérisé en ce que** l'installation comprend au moins un ensemble (1) selon l'une quelconque des revendications 1 à 9.

## Patentansprüche

1. Gesamtheit (1) für ein Fahrzeug, welche eine seitliche Leitung (2) einer Tragwerkssäule des Fahrzeugs aufweist, wobei diese Leitung (2) eine Luftzirkulation erlaubt, **dadurch gekennzeichnet, dass** die Leitung (2) einen Abschnitt aufweist, der zwei Luftdurchgänge (4a, 4b) aufweist, die durch einen Raum (6) getrennt sind, der fähig ist, von einem Gurt (8) eines Sicherheitsgurtsystems durchquert zu werden.

2. Gesamtheit (1) nach Anspruch 1, **dadurch gekennzeichnet, dass** die Leitung (2) einen unteren Teil (10a) und einen oberen Teil (10b) aufweist, wobei jeder der Teile (10a, 10b) ein erstes Ende (12a, 12b) mit einem einzigen Luftdurchgang und ein zweites Ende (14a, 14b) aufweist, welches die zwei Luftdurchgänge (4a, 4b) umfasst, wobei die zweiten Enden (14a, 14b) des unteren Teils (10a) und des oberen Teils (10b) geeignet sind, miteinander zusammenzuwirken.

3. Gesamtheit (1) nach Anspruch 2, **dadurch gekennzeichnet, dass** diese Gesamtheit (1) eine Einlage (16) des Tragwerks umfasst, an welcher eine Oberfläche des unteren Teils (10a) der Leitung (2) befestigt ist, die nach außen vom Fahrzeug gerichtet ist, wobei diese Einlage (16) eine Spannrolle (18) des Sicherheitsgurtsystems trägt.

4. Gesamtheit (1) nach Anspruch 2 oder 3, **dadurch gekennzeichnet, dass** diese Gesamtheit (1) ein Gehängeteil (20) (frz. *baudrier*) des Tragwerks umfasst, an welcher eine Oberfläche des oberen Teils (10b) der Leitung (2) befestigt ist, die nach innen vom Fahrzeug gerichtet ist, wobei dieses Gehängeteil (20) ein Umkehrmittel (22) des Sicherheitsgurtsystems trägt.

5. Gesamtheit (1) nach einem der Ansprüche 2 bis 4, **dadurch gekennzeichnet, dass** diese Gesamtheit (1) eine untere Verkleidung (26a) umfasst, die an einer Oberfläche der Einlage (16) befestigt ist, die zum Inneren des Fahrzeugs hin gerichtet ist.

6. Gesamtheit (1) nach Anspruch 4 oder Anspruch 5, **dadurch gekennzeichnet, dass** diese Gesamtheit (1) eine obere Verkleidung (26b) umfasst, die an einer Oberfläche des Gehängeteils (20) befestigt ist, die zum Inneren des Fahrzeugs hin gerichtet ist.

7. Gesamtheit (1) nach irgendeinem der vorangegangenen Ansprüche, **dadurch gekennzeichnet, dass** der Raum (6), welcher geeignet ist, von dem Gurt (8) des Sicherheitsgurtsystems durchquert zu werden, sich in etwa auf mittlerer Höhe des Fahrzeuges befindet.

8. Gesamtheit (1) nach irgendeinem der Ansprüche 2 bis 7, **dadurch gekennzeichnet, dass** die Summe der Querschnitte der zwei Luftdurchgänge (4a, 4b) größer oder gleich dem mittleren Querschnitt des unteren Teils (10a) der Leitung (2) ist.

9. Gesamtheit (1) nach irgendeinem der vorangegangenen Ansprüche, **dadurch gekennzeichnet, dass** der Raum (6) von einer Art Wassertropfenform ist, die sich in einer Hauptrichtung der Leitung (2) erstreckt.

10. Vorrichtung zur Beheizung, Belüftung und Klimatisierung für ein Fahrzeug, **dadurch gekennzeichnet, dass** sie mindestens eine Gesamtheit (1) nach einem der vorangegangenen Ansprüche aufweist.

11. Fahrzeug von der Art, welches eine Vorrichtung zur Beheizung, Belüftung und Klimatisierung aufweist, **dadurch gekennzeichnet, dass** die Vorrichtung mindestens eine Gesamtheit (1) nach irgendeinem der Ansprüche 1 bis 9 aufweist.

## Claims

1. An assembly (1) for a vehicle, comprising a lateral duct (2) of a bodywork column of the vehicle, this duct (2) enabling air to circulate, **characterised in that** the duct (2) comprises a portion comprising two air passages (4a, 4b) separated by a space (6) adapted to be traversed by a belt (8) of a safety belt system.

2. An assembly (1) as claimed in claim 1, **characterised in that** the duct (2) comprises a lower portion (10a) and an upper portion (10b), each of the portions (10a, 10b) having a first end (12a, 12b) with a single air passage and a second end (14a, 14b) comprising the two air passages (4a, 4b), the second ends (14a, 14b) of the upper and lower portions (10a, 10b) being adapted to cooperate with one another.

3. An assembly (1) as claimed in claim 2, **characterised in that** this assembly (1) comprises a lining (16) of the bodywork on which there is secured a surface of the lower portion (10a) of the duct (2) oriented towards the exterior of the vehicle, this lining (16) bearing a winder (18) of the safety belt system.

4. An assembly (1) as claimed in claim 2 or claim 3, **characterised in that** the assembly (1) comprises a shoulder belt (20) of the bodywork on which there is secured a surface of the upper portion (10b) of the duct (2) oriented towards the interior of the vehicle, this shoulder belt (20) bearing a recall (22) of the safety belt system.

5. An assembly (1) as claimed in any one of claims 2 to 4, **characterised in that** this assembly (1) comprises a lower covering (26a) secured to a surface of the lining (16) oriented towards the interior of the vehicle.

6. An assembly (1) as claimed in claim 4 or claim 5, **characterised in that** this assembly (1) comprises an upper covering (26b) secured to a surface of the shoulder belt (20) oriented towards the interior of the vehicle.

7. An assembly (1) as claimed in any one of the preceding claims, **characterised in that** the space (6) adapted to be traversed by the belt (8) of the safety belt system is disposed approximately at mid-height of the vehicle.

8. An assembly (1) as claimed in any one of claims 2 to 7, **characterised in that** the sum of the sections of the two air passages (4a, 4b) is higher than or equal to the mean section of the lower portion (10a) of the duct (2).

9. An assembly as claimed in any one of the preceding claims, **characterised in that** the space (6) has a shape of a droplet type extending in a main direction of the duct (2).

10. A heating, ventilation and air conditioning installation for a vehicle, **characterised in that** it comprises at least one assembly (1) as claimed in any one of the preceding claims.

11. A vehicle of the type comprising a heating, ventilation and air conditioning installation, **characterised in that** the installation comprises at least one assembly (1) as claimed in any one of claims 1 to 9.
